# EUROPEAN PATENT APPLICATION

(11) **EP 4 412 289 A1**
(43) Date of publication of application: **07.08.2024**
(21) Application number: 23218757.5
(22) Date of filing: 20.12.2023
(51) Int. Cl.: H04W 24/02, H04W 24/08

(54) **NETWORK THROUGHPUT DATA COVERAGE EXPANSION**

(30) Priority: 02.02.2023 GB 202301510
(71) Applicant: Dense Air Limited, Marlow, Buckinghamshire SL7 1EY (GB)
(72) Inventor: MURPHY, Luke Allan David, Marlow, SL7 1EY (GB)
(74) Representative: D Young & Co LLP

(57) **Abstract**

A computer-implemented method for expanding network throughput data coverage for an MNO network in a region, the method comprising: retrieving a plurality of sensor data records on the MNO network collected from a plurality of mobile network devices, wherein each sensor data record comprises measurement location data and one or more network condition measurements; processing the plurality of sensor data records, using a model of correlations between network conditions and throughput, to calculate synthetic network throughput data at locations in the region.

## Description

### FIELD AND BACKGROUND

The present techniques relate to expanding network throughput data coverage for an MNO network in a region. More particularly, the disclosure describes a method, computer program and device which processes a retrieved plurality of sensor data records comprising measurement locations and network condition measures to calculate synthetic throughput data across the region.

In recent years the demands on mobile networks have steadily increased with consumers increasingly coming to expect consistent high performance levels with minimal signal interruptions or other connectivity issues. As demand has grown regulators have released new high-frequency spectrum bands in an attempt to satisfy this consumer demand. While these high-frequency bands have a number of advantages, including the potential for very high throughputs, such bands have weak signal penetration into structures and are more susceptible to changing environmental conditions which can lead to uneven performance.

In order to ensure high and consistent network throughput, for example to aid in the provision of new cell sites, it is helpful to have an indication of the existing network throughput conditions. A number of techniques have been developed to aid in this. One approach has been to calculate a map of theoretical network throughput from the known locations and characteristics of the cell sites that make up a Mobile Network Operator (MNO) network. Another approach, has been to conduct a real-world survey of network throughput at locations across the deployment area of an MNO network.

However, as identified by the present inventors, each of these prior techniques have a number of downsides. For example, theoretically calculating an expected network throughput is unable to accurately predict local conditions, for example network throughputs inside buildings, as such techniques lack detailed data on the contents and layout of buildings as well as other structures and obstacles between the cell sites and end user UE devices. In addition, such theoretical predictions typically lack information on the locations of other UE devices that could impact performance. And finally, such theoretical predictions are unable to take account of time-varying impacts on performance such as climatic conditions. Conducting a real-world survey of network throughput at locations across the deployment area of an MNO network is expensive and time consuming and faces logistical problems when collecting data from inside of private buildings.

Accordingly, as identified by the present inventors, it is desirable to provide an approach which allows for an efficient expansion in the coverage of real-world network throughput data which does not necessitate excessive usage of computing and networking resource.

At least certain embodiments of the present disclosure address one or more of these problems as set out above.

### SUMMARY

Viewed from one perspective, there is provided a computer-implemented method for expanding network throughput data coverage for an MNO network in a region, the method comprising: retrieving a plurality of sensor data records on the MNO network collected from a plurality of mobile network devices, wherein each sensor data record comprises measurement location data and one or more network condition measurements; processing the plurality of sensor data records, using a model of correlations between network conditions and throughput, to calculate synthetic network throughput data at locations in the region.

In other words, the present approach can be considered as a technique which allows for the coverage of network throughput data based on real-world measurements to be expanded in a region covered by a Mobile Network Operator (MNO) network. The approach does so by processing, using a model of correlations, a retrieved plurality of sensor data records on the MNO network from a plurality of mobile network devices (e.g. mobile phones, tablets, hotspots, access points, cell sites etc.). These sensor data records comprise both a measurement location that locates the measure, for example, derived from positional data from GPS, WiFi and/or Bluetooth of a user equipment (UE) device and one or more network condition measurements.

As identified by the present inventors, certain network condition measurements are more resource intensive to collect in terms of computational and networking resources. In particular, directly measuring network throughput necessitates that the measuring mobile network device (e.g. a UE device) sends and receives a large quantity of data over the network which in some cases is more than 500 MB when measuring a 5G connection. This puts a high degree of strain on the measuring mobile network device and makes such measurements unsuitable for being periodically re-run in the background. In contrast, a number of other network condition measurements are usually either passively available to the measuring device (e.g. radio band, signal to noise ratio, signal received power, signal received quality) or are obtainable with minimal usage of computing and networking resources of the measuring device (e.g. latency and jitter).

Accordingly, these low impact network condition measurements can be periodically collected on a plurality of mobile network devices and then processed to calculate a real-world measure of network throughput at the measured locations in the region. In some examples, the sensor data records can be retrieved from a large plurality of mobile network devices, for example, in excess of a 1,000 mobile network devices. Additionally, or alternatively, the sensor data records can be retrieved from data collected in a crowdsourced manner. Thereby, the present approach allows for synthetic network throughput data to be calculated using real-world data that is not intensive in either computational or networking resource to collect but which still allows for expanding the network throughput data coverage for an MNO network in a region.

Viewed from one perspective, there is provided a computer program for controlling a device to perform any of the above-described methods. In some examples, the computer program is encoded on a computer-readable medium.

Viewed from one perspective, there is provided a device comprising: a processor and data storage, the device being configured to perform any of the above-described methods.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1: Schematically illustrates a method for expanding network throughput data coverage for an MNO network in a region.
Figure 2: Schematically illustrates a region where sensor data records can be collected.
Figure 3: Schematically illustrates a data table depicting a plurality of sensor data records collected from a plurality of mobile network devices.
Figure 4: Schematically illustrates a method for processing the plurality of sensor data records.
Figure 5: Schematically illustrates a region divided into areas where sensor data records can be grouped using **A:** hexbins and **B:** building footprints.
Figure 6: Shows an example table of classifications into low, medium and high throughputs.
Figure 7: Shows a table depicting optimisation targets for the model of correlations.
Figure 8: Schematically illustrates a region with expanded coverage of network throughput data together with a deployment plan for additional cell sites.
Figure 9: Schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### DETAILED DESCRIPTION

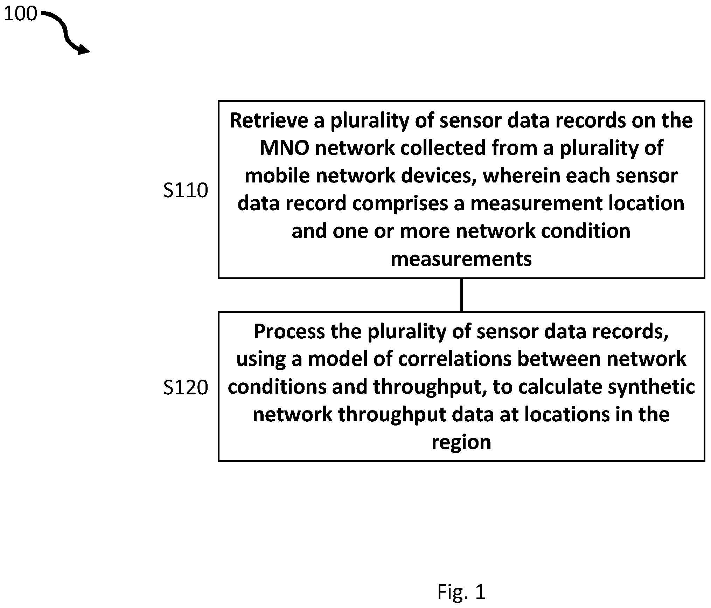

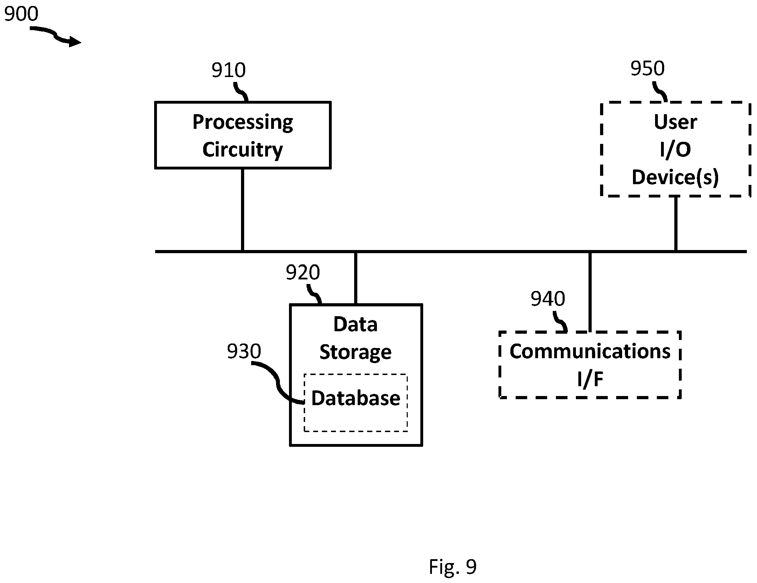

Figure 1 shows a schematic illustration of a method 100 for expanding network throughput data coverage for an MNO network in a region. It will be understood that method 100 can be performed using the electronic device of the type shown in Figure 9. The method includes the following steps.

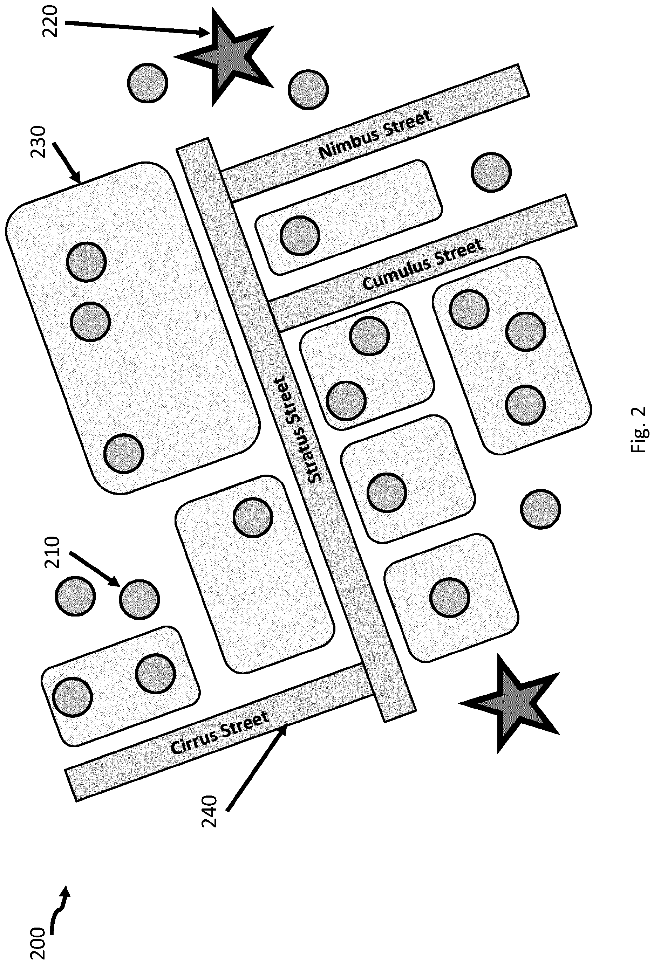

At step S110, the method retrieves a plurality of sensor data records on the MNO network collected from a plurality of mobile network devices, wherein each sensor data record comprises measurement location data and one or more network condition measurements. In some examples, the sensor data records can be collected in an environment similar to that depicted in figure 2.

In some examples the network condition measurements comprise one or more of radio band, signal to noise ratio, signal received power, signal received quality, latency and jitter. Thereby, measurements are collected which impose a low burden on network bandwidth and mobile network device computational resources (e.g. memory usage and processing time) that are useable to calculate synthetic network throughput data. Further, by being low impact such measurements can be frequently collected, for example in the background on the mobile network device, thereby providing extensive spatial and temporal data coverage.

In some examples, the measurement location data comprises satellite-navigation system sensor data. Thereby a direct measure of measurement location is provided that is computationally efficient to use. In other examples, the measurement location data comprises WiFi and/or Bluetooth signal data. Thereby, measurement locations can be determined even where a clear signal of the sky is not available. The WiFi and/or Bluetooth signal data can be processed into location data by accessing a database which contains the locations of where WiFi/Bluetooth transmitters are situated. It will be appreciated that WiFi/Bluetooth signal data can be used in combination with satellite-navigation system data to enhance horizontal location accuracy. It will also be appreciated, that the derivation of location data from WiFi and/or Bluetooth signal data can be performed either on the mobile network device itself or the raw data can be stored in the sensor data records for later derivation, for example, during the processing of the plurality of sensor data records in step S120. Example satellite-navigation systems include: United States' Global Positioning System (GPS), Russia's Global Navigation Satellite System (GLONASS), China's BeiDou Navigation Satellite System, the European Union's Galileo, Japan's Quasi-Zenith Satellite System (QZSS), and India's Regional Navigation Satellite System (IRNSS). It will be appreciated, that the present techniques can be used with any satellite-navigation system or any combination of satellite-navigation systems.

The method 100 continues to step S120. At step S120, the method processes the plurality of sensor data records, using a model of correlations between network conditions and throughput, to calculate synthetic network throughput data at locations in the region. In some examples, retrieving the plurality of sensor data records comprises accessing a database storing data on one or more of the plurality of sensor data records. Thereby the method need not have a live connection to each of the plurality of mobile network devices. It will be appreciated that the database may be located either substantially integral with the computing device that performs the method or remote from the computing device, for example, as part of a server. In other examples, retrieving the plurality of sensor data records comprises receiving one or more of the plurality of sensor data records from one or more of the plurality of mobile network devices. Thereby, the method can have access to the most recently available sensor data captured from each of the plurality of mobile network device which allows for a live view of network conditions of the MNO network.

In some examples, the plurality of sensor data records comprises more than 1 billion measurements. By collecting a large quantity of data, across a range of times and from a plurality of spatially separated devices, can allow the method to achieve a high spatial resolution with good accuracy (e.g. variations in data cause by changing environmental conditions can be averaged out).

It will be appreciated that, in some examples, one or more of the plurality of mobile network devices comprise UE and/or small cells. Using UE (User Equipment) devices to collect sensor data records can vastly increase the quantity of data collected as, there are typically many more UE in a given area than there are cell sites. In addition, data from UE devices correlates well with the real-world usage conditions (i.e. when and where) in which consumers actually use the MNO. When small cells are used to collect sensor data the (partial) deployment of the small cells can be used to collect additional data, and in some examples, further refine a deployment plan of where further (small) cells could be deployed. In some examples, one or more of the plurality of mobile network devices used to collect sensor data comprise macrocells.

Figure 2 shows a schematic illustration of a region where sensor data records can be collected. The region 200 depicts a plurality of mobile network devices 210, a plurality of cell sites 220, a plurality of buildings 230 and a plurality of streets 240. It will be appreciated that the mobile network devices 210 can collect network condition measurements relating to the cell sites 220 and associate these with their measurement locations as part of a plurality of sensor data records.

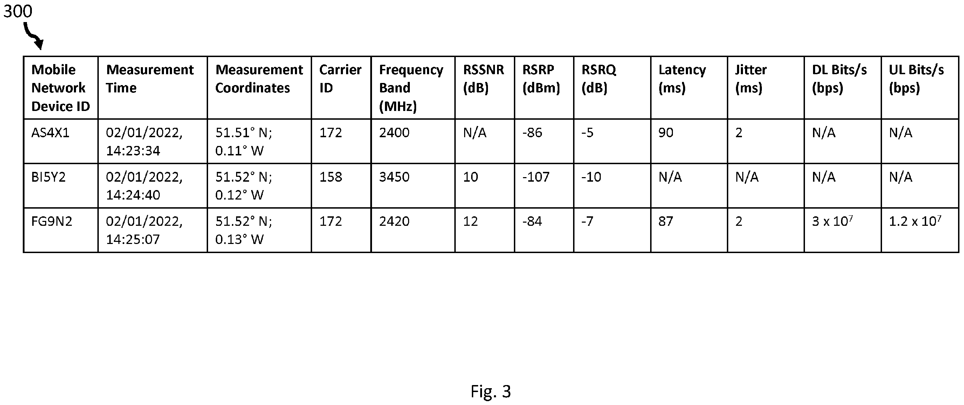

Figure 3 shows a schematic illustration of a data table 300 depicting a plurality of sensor data records collected from a plurality of mobile network devices. In the present example, the table includes: mobile network device ID, measurement time, measurement coordinates, carrier ID, frequency band, RSSNR, RSRP, RSRQ, latency, jitter, download (DL) bit/s, upload (UL) bits/s. Each row of the table represents an example sensor data record. As can be seen different sensor data records include different data types such that there is variation in the data included in sensor data records. For example, the first sensor data record does not include RSSNR or either of the data throughput measurements (i.e. DL bit/s and UL bits/s) and the second sensor data record doesn't include latency, jitter or either of the data throughput measurements. In contrast, the third sensor data record includes all of the data types depicted in the illustrative data table 300.

It will be appreciated that the data fields depicted in data table 300 are merely examples of the data fields that can be present in sensor data records and that in other examples more or fewer data fields can be present. In some examples, the sensor data records further comprise one or more of cell distance and cell azimuth. In other words the sensor data records includes the distance and direction to the connected cell (tower). Such data can assist with allowing for an accurate calculation of synthetic network throughput data.

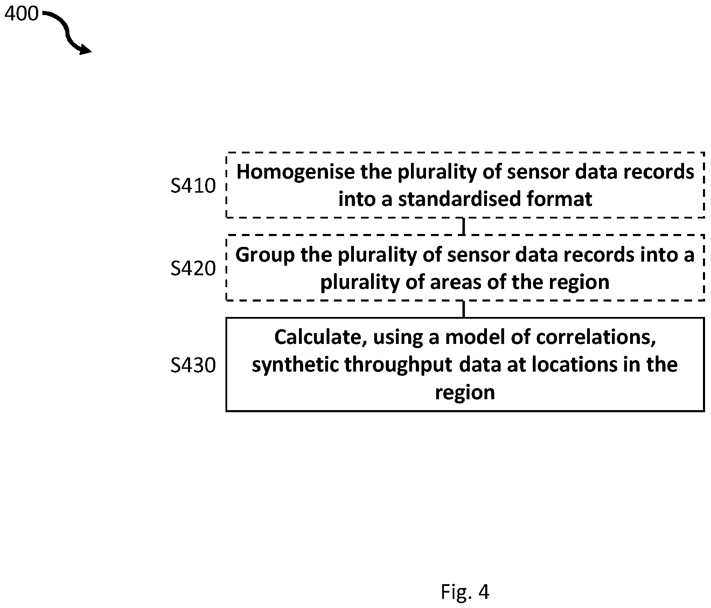

Figure 4 shows a schematic illustration of a method 400 for processing the plurality of sensor data records. It will be appreciated that method 400 can be performed using the electronic device of the type shown in Figure 9. In some examples, method 400 can be considered as corresponding to step S120 depicted in method 100. The method 400 includes the following steps.

At step S410, the method homogenises the plurality of sensor data records into a standardised format. Thereby data can be collected from a variety of dissimilar mobile network devices but can nevertheless be accurately processed collectively. The method then continues to step S420.

At step S420, the method groups the plurality of sensor data records into a plurality of areas of the region. Thereby for a given area of the region a plurality of records can be combined and collectively processed. In some examples, for example where given sensor data records are missing one or more data fields, the combination of a plurality of sensor data records can allow for a complete set of data fields to be associated with an area of the region. Thereby all data fields can be made available for a given area when calculating synthetic throughput data allowing for an accurate calculation. Further, by grouping a plurality of sensor data records for an area, one or more data fields can be averaged thereby allowing for accurate values of those data fields and thereby in turn allowing for an accurate calculation of synthetic network throughput data.

It will therefore be appreciated that, in some examples, a first sensor data record comprises a first type of network condition measurement but does not comprise a second type of network condition measurement and a second sensor data record comprises the second type of network condition measurement but does not comprise the first type of network condition measurement. The method thereby allows for processing of sensor data records that do not all contain the same data fields and thereby allows the method to utilise a greater number of sensor data records when calculating synthetic network throughput data i.e. the method does not need to discard incomplete sensor data records.

In some examples the processing of the plurality of sensor data records comprises grouping the plurality of sensor data records into a plurality of areas of the region, wherein the first sensor data record and the second sensor data record correspond to the same area, and wherein the first sensor data record and the second sensor data record are collectively processed by the model of correlations to calculate a single synthetic network throughput datum. Thereby a plurality of records can be collectively used to generate a complete set of data fields for a given area thereby allow for synthetic network throughput data to be calculated in a consistent manner. In other examples, the model of correlations processes the first sensor data record to calculate a first synthetic network throughput datum and wherein the model of correlations processes the second sensor data record to calculate a second synthetic network throughput datum. Thereby, the coverage of where synthetic network throughput data can be calculated is expanded. In other words method can calculate synthetic network throughput data using a range of different input data fields.

In some examples, one or more of the plurality of areas is a hexbin and/or one or more of the plurality of areas is a building footprint. As identified by the present inventors, networking conditions can be different between indoors and outdoors due, for example, to absorption by structures, differences in temperature and differences in humidity. In addition, such factors can vary from area to area. Thereby, by grouping the sensor data records into such areas the accuracy of the synthetic network throughput data can be enhanced by grouping sensor data records with similar environmental and other characteristics together prior to the processing to calculate synthetic network throughput data.

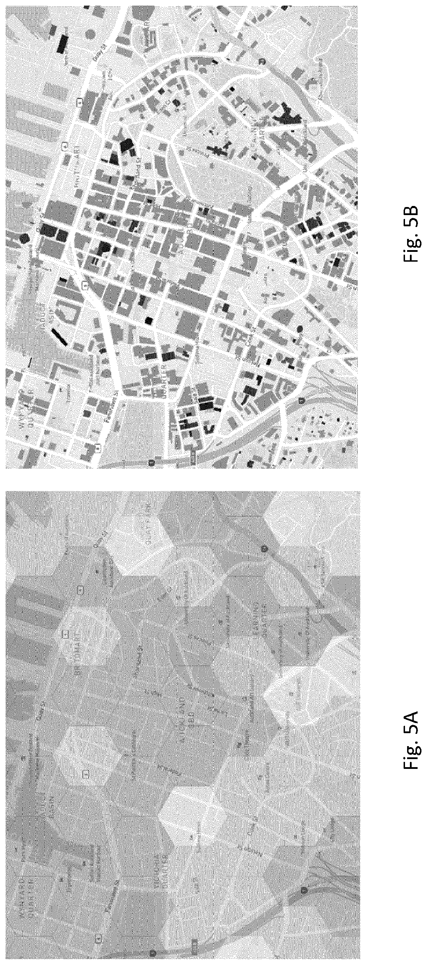

Figures 5 shows a schematic illustration of a region divided into areas where sensor data records is grouped using **A:** hexbins and **B:** building footprints. It will be appreciated that in some examples a region can be simultaneously divided up using both hexbins and using building footprints, for example, sensor data records can be grouped using building footprints for sensor data records that have a measurement location indicating they are located indoors and sensor data records can be grouped using hexbins for sensor data records that have a measurement location indicating they are located outdoors.

The method 400 continues to step S430. At step S430, the method calculates, using a model of correlations, synthetic throughput data at locations in the region. The model of correlations provides for the utilisation of one or more network condition measurements (e.g. low-impact network condition measurements such as radio band, signal to noise ratio, signal received power, signal received quality, latency and jitter) in calculating network throughput measurements which are high-impact to directly collect (i.e. both and in terms of computational resources of the collecting mobile network device and in terms of network resources).

The model of correlations can be based on historical data which includes sensor data records where both one or more (low-impact) network condition measurements and a real measurement of network throughput data are present. Thereby correlations between the one or more network condition measurements and network throughput data can be established which can be used, when on one or more network condition measurements are present without corresponding real network throughput data, to calculate synthetic network throughput data. It will be appreciated that in some examples, the historical data includes (low-impact) network condition measurements and real measurements of network throughput data associated at the same measurement locations as each other. Thereby, the correlations can be straightforwardly determined. In other examples, the historical data includes (low-impact) network condition measurements and real measurements of network throughput data at different measurement locations than each other. In such examples, the correlations can be determined by, for example, creating a map of various network condition measurements and a map of network throughput data where the measurements and data can be interpolated between real measurement locations such that the (estimated) values of both can be determined at a plurality of locations to determine the correlation.

The determination of correlations in the historical data between network condition measurements and network throughput data for the model of correlations can be determined using any suitable technique. Example techniques include regression (e.g. linear, polynomial or logistic) and/or machine learning (e.g. decision tree, random forest, neural network, gradient boosting, Gaussian naive Bayes, and/or model ensemble techniques). In general the model of correlations is multi-factorial correlating a number of different network condition measurements types to network throughput. However, it will be appreciated that in some examples the model of correlations includes direct correlations between a single network condition measurement type and network throughput.

In other examples, the model of correlations is based on experimental or theoretical relationships between network condition measurements and network throughput data, for example, determined through measurements in a lab using real equipment or based on physical calculation.

While method 400 has been described above as comprising all of steps S410, S420 and S430 it will be appreciated that steps S410 and S420 are optional. Further, it will be appreciated that step S420 can be performed prior to step S410.

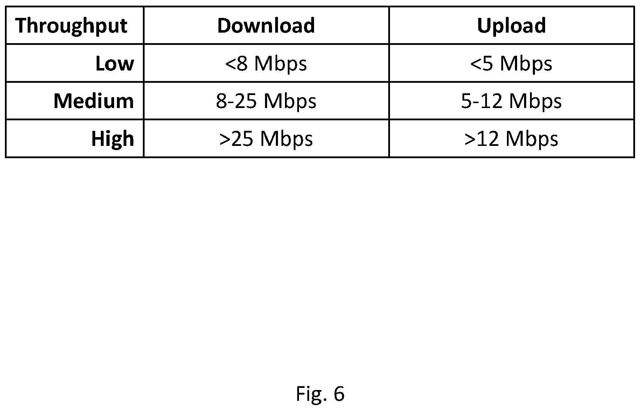

In some examples, the network throughput data calculated in step S120 / step S430 is a network throughput classification into one of a plurality of discrete categories. In other words, in these examples, the model of correlations outputs an (estimated) network throughput classification rather than a numeric value for the calculated network throughput. Figure 6 shows an example table of classifications into low, medium and high throughputs where the value shows the meaning of the classification. As can be seen in the present example, the throughput classification is divided into download throughput classification and upload throughput classification. However, it will however be appreciated that in other examples a single classification can be provided for a combined measure of download and upload throughput. It will also be appreciated that while three levels of classification have been depicted in figure 6 (i.e. low, medium and high), in other examples there can be two, four, five, six, seven, eight, nine or ten levels of classification. In some examples, the model of correlations separately calculates separate synthetic throughput data for upload and download. As identified by the present inventors, in some real-world scenarios, there can be a significant difference in the performance of upload and download throughput such that separately calculating synthetic throughput data for both is advantageous. In other examples, the model of correlations calculates unified synthetic network throughput data for both upload and for download. Thereby a single unified throughput metric is provided for a given measurement location.

As recognised by the present inventors, using the model of correlations to calculate a throughput classification rather than a throughput value can be advantageous for certain use cases. For example, where the throughput measurements are being used to identify locations for further cell sites it is merely necessary to identify locations with poor (i.e. low) network throughput rather than determine the specific values. Thereby the model of correlations can be optimised to provide an accurate classification category rather than a specific numerical value, for example, by minimising errors in the model around classification boundaries thus enhancing accuracy of data useful for the use-case. It will, however, be appreciated that in other examples, for example where it is useful for the use-case to know the exact numerical value of network throughput, that the model of correlations can generate a numerical network throughput value, i.e. the synthetic network throughput data is a numerical network throughput value.

In some examples, the model of correlations is specific to the region. As identified by the present inventors, various factors may vary from region to region that affect the correlations between the network condition measurements and network throughput. For example, the treatment of radio spectrum and EM noise is different between legal jurisdictions, climatic factors are different between regions (e.g. more solar radiation nearer the equator), and building materials and techniques are different between regions. Thereby, providing a model of correlations that is specific to a given region can enhance accuracy. These specific models can be derived by using historical data for the specific region in question.

In some examples, the sensor data records are collected on a plurality of MNO networks and wherein the model of correlations calculates separate synthetic network throughput data for each MNO network. Thereby coverage of network throughput data can be expanded for each of the plurality of different MNOs networks.

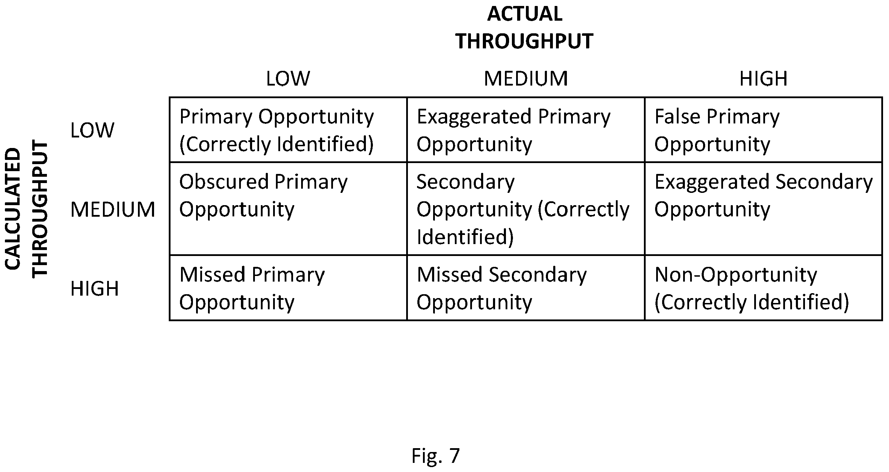

Figure 7 shows a schematic illustration of a table depicting optimisation targets for the model of correlations for a use-case of identifying locations with poor (i.e. low) network throughput for deploying further cell sites. In the table, the rows depict low, medium and high network throughput as calculated by the model of correlations. The columns depict low, medium and high network throughput as actually present (i.e. the true underlying state of network throughput). The table shows the consequences for alignments and misalignments between the model of correlations and reality.

When identifying new cells sites to improve network throughput, the primary opportunities come from locations that at present have low actual throughput and secondary opportunities come from locations that at present have medium actual throughput. In contrast locations that already have high actual throughput are non-opportunities as they are already well served. Accordingly, as set out in the table, misclassifications regarding primary opportunities are more serious than misclassifications concerning secondary opportunities and non-opportunities. Accordingly, in some examples the model of correlations has higher accuracy at lower network throughput than at higher network throughput. This can be achieved, for example, by minimising the errors in the primary opportunity table squares when deriving the model of correlations from the historic data. Thereby a model of correlations can be derived that is optimised for a cell site deployment use-case.

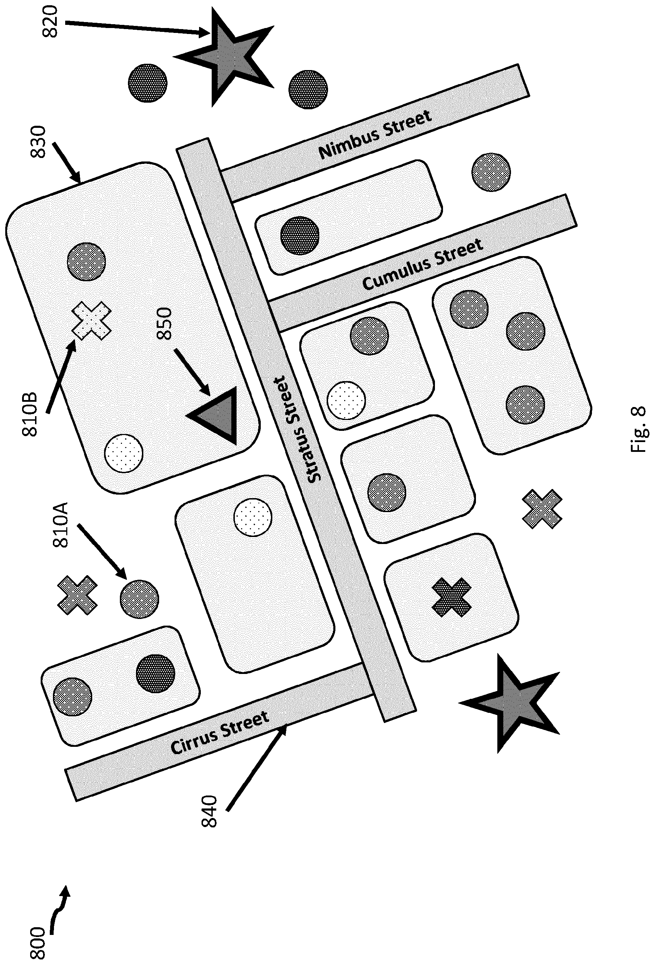

Figure 8 shows a schematic illustration of a region with expanded coverage of network throughput data together with a deployment plan for additional cell sites. The region 800 depicts a plurality of synthetic network throughput data 810A (depicted as circles), a plurality of directly measured network throughput measurements 810B (depicted as crosses), a plurality of current cell sites 820 (depicted as stars), a plurality of buildings 830, a plurality of streets 840 and a proposed new cell site 850 (depicted as a triangle). In figure 8 the plurality of synthetic network throughput data 810A and the plurality of directly measured network throughput measurements 810B are shaded to show the categorisation network throughput between low, medium and high with higher throughput shaded darker.

In some examples, the method 100 further comprises generating a map of throughput. Thereby a (visual) depiction of the expanded throughput data is provided which is straightforward for human physiology to interpret. In some examples, one or more of the plurality of sensor data records comprise a network throughput measurement and wherein the map of network throughput comprises both network throughput measurements and synthetic network throughput data. Thereby, a map is provided that makes use of the full set of available throughput data thereby further providing expanded coverage of throughput data in the region. Figure 8 depicts an example of this as both a plurality of synthetic network throughput data 810A and a plurality of directly measured network throughput measurements 810B are depicted together.

In some examples, methods 100, 400 further comprise generating a deployment plan based on the generated map of network throughput which identifies locations for adding one or more cell sites where the network throughput is low. Thereby, locations where throughput is low, and accordingly would benefit from increased cell coverage, can be automatically identified to provide a deployment plan. It will be appreciated that the deployment plan can specify a range of different cell site types (e.g. small cell, macrocell) depending on the location and the size of low throughput zone. For example, the deployment plan can specify a small cell site for deployment inside a building where the building has low network throughput. For example, in figure 8, a new (small) cell site 850 is proposed inside of the building labelled 830. As can be seen, this building currently has poor network throughput and would therefore benefit from increased coverage from a new cell site.

In some examples, the sensor data records are collected on a plurality of MNO networks and wherein the model of correlations calculates separate synthetic network throughput data for each MNO network, and wherein the deployment plan identifies locations for adding the one or more cell sites where two or more of the MNO networks have low networks throughput. Thereby, the deployment plan can identify locations where there is collective poor throughput across a plurality of MNO networks. In some examples, the deployment plan can address the collective poor throughput across the MNO networks through a cell device utilising shared spectrum or otherwise sharing MNO access.

Figure 9 schematically illustrates an example of an electronic device 900 which can be used to implement teachings described above, including method 100 and method 400.

The electronic device 900 has processing circuitry 910 for performing data processing in response to program instructions and data storage 920 for storing data and instructions to be processed by the processing circuitry 910. In some examples, the processing circuitry 910 includes one or more caches for caching recent data or instructions. The data storage 920 may have a database 930 which can, for example, store sensor data records or locations of current cell sites. It will be appreciated that Figure 9 is merely an example of possible hardware that may be provided in the device and other components may also be provided. For example, the device may include a communications interface 940 which can be used to retrieve sensor data records from a plurality of mobile network devices. The device 900 may additionally or alternatively be provided with one or more user input/output device(s) 950 to receive input from a user (e.g. parameters to determine information for a deployment plan) or to output information (e.g. a map of network throughput and/or a deployment plan) to a user.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A computer-implemented method for expanding network throughput data coverage for an MNO network in a region, the method comprising:
   retrieving a plurality of sensor data records on the MNO network collected from a plurality of mobile network devices, wherein each sensor data record comprises measurement location data and one or more network condition measurements;
   processing the plurality of sensor data records, using a model of correlations between network conditions and throughput, to calculate synthetic network throughput data at locations in the region.
2. The method of clause 1, wherein retrieving the plurality of sensor data records comprises accessing a database storing data on one or more of the plurality of sensor data records.
3. The method of clause 1 or clause 2, wherein retrieving the plurality of sensor data records comprises receiving data on one or more of the plurality of sensor data records from one or more of the plurality of mobile network devices.
4. The method of any preceding clause, wherein one or more of the plurality of mobile network devices comprise UE and/or small cells.
5. The method of any preceding clause, wherein the network condition measurements comprise one or more of radio band, signal to noise ratio, signal received power, signal received quality, latency and jitter.
6. The method of any preceding clause, wherein the measurement location data comprises satellite-navigation system sensor data, WiFi signal data and/or Bluetooth signal data.
7. The method of any preceding clause, wherein the sensor data records further comprise one or more of cell distance and cell azimuth.
8. The method of any preceding clause, wherein the plurality of sensor data records comprises more than 1 billion measurements.
9. The method of any preceding clause, wherein processing the plurality of sensor data records comprises homogenising the plurality of sensor data records into a standardised format.
10. The method of any preceding clause, wherein processing the plurality of sensor data records comprises grouping the plurality of sensor data records into a plurality of areas of the region.
11. The method of clause 10, wherein one or more of the plurality of areas is a hexbin and/or wherein one or more of the plurality of areas is a building footprint.
12. The method of any preceding clause, wherein the synthetic network throughput data is a network throughput classification into one of a plurality of discrete categories.
13. The method of any preceding clause, wherein the synthetic network throughput data is a numerical network throughput value.
14. The method of any preceding clause, wherein the model of correlations has higher accuracy at lower network throughput than at higher network throughput.
15. The method of any preceding clause, wherein a first sensor data record comprises a first type of network condition measurement but does not comprise a second type of network condition measurement and a second sensor data record comprises the second type of network condition measurement but does not comprise the first type of network condition measurement.
16. The method of clause 15 wherein processing the plurality of sensor data records comprises grouping the plurality of sensor data records into a plurality of areas of the region, wherein the first sensor data record and the second sensor data record correspond to the same area, and wherein the first sensor data record and the second sensor data record are collectively processed by the model of correlations to calculate a single synthetic network throughput datum.
17. The method of clause 15 wherein the model of correlations processes the first sensor data record to calculate a first synthetic network throughput datum and wherein the model of correlations processes the second sensor data record to calculate a second synthetic network throughput datum.
18. The method of any preceding clause, wherein the model of correlations is specific to the region.
19. The method of any preceding clause, wherein sensor data records are collected on a plurality of MNO networks and wherein the model of correlations calculates separate synthetic network throughput data for each MNO network.
20. The method of any preceding clause, further comprising generating a map of network throughput.
21. The method of clause 20, wherein one or more of the plurality of sensor data records comprise a network throughput measurement and wherein the map of network throughput comprises both network throughput measurements and synthetic network throughput data.
22. The method of clause 20 or clause 21, further comprising generating a deployment plan based on the generated map of network throughput which identifies locations for adding one or more cell sites where the network throughput is low.
23. The method of clause 22, wherein sensor data records are collected on a plurality of MNO networks and wherein the model of correlations calculates separate synthetic network throughput data for each MNO network, and wherein the deployment plan identifies locations for adding the one or more cell sites where two or more of the MNO networks have low networks throughput.
24. The method of any preceding clause, wherein the model of correlations separately calculates separate synthetic network throughput data for upload and for download.
25. A computer program to control a device to perform the method of any preceding clause.
26. At least one computer-readable medium comprising the computer program of clause 25.
27. A device comprising a processor and data storage, the device configured to perform the method of any of clauses 1 to 24.

## Claims

1. A computer-implemented method for expanding network throughput data coverage for an MNO network in a region, the method comprising:
retrieving a plurality of sensor data records on the MNO network collected from a plurality of mobile network devices, wherein each sensor data record comprises measurement location data and one or more network condition measurements;
processing the plurality of sensor data records, using a model of correlations between network conditions and throughput, to calculate synthetic network throughput data at locations in the region.

2. The method of any preceding claim, wherein the sensor data records further comprise one or more of cell distance and cell azimuth.

3. The method of any preceding claim, wherein processing the plurality of sensor data records comprises homogenising the plurality of sensor data records into a standardised format.

4. The method of any preceding claim, wherein processing the plurality of sensor data records comprises grouping the plurality of sensor data records into a plurality of areas of the region, for example wherein one or more of the plurality of areas is a hexbin and/or wherein one or more of the plurality of areas is a building footprint.

5. The method of any preceding claim, wherein the synthetic network throughput data is a network throughput classification into one of a plurality of discrete categories or is a numerical network throughput value.

6. The method of any preceding claim, wherein the model of correlations has higher accuracy at lower network throughput than at higher network throughput.

7. The method of any preceding claim, wherein a first sensor data record comprises a first type of network condition measurement but does not comprise a second type of network condition measurement and a second sensor data record comprises the second type of network condition measurement but does not comprise the first type of network condition measurement.

8. The method of claim 7 wherein processing the plurality of sensor data records comprises grouping the plurality of sensor data records into a plurality of areas of the region, wherein the first sensor data record and the second sensor data record correspond to the same area, and wherein the first sensor data record and the second sensor data record are collectively processed by the model of correlations to calculate a single synthetic network throughput datum.

9. The method of claim 7 wherein the model of correlations processes the first sensor data record to calculate a first synthetic network throughput datum and wherein the model of correlations processes the second sensor data record to calculate a second synthetic network throughput datum.

10. The method of any preceding claim, wherein sensor data records are collected on a plurality of MNO networks and wherein the model of correlations calculates separate synthetic network throughput data for each MNO network.

11. The method of any preceding claim, further comprising generating a map of network throughput, wherein one or more of the plurality of sensor data records comprise a network throughput measurement and wherein the map of network throughput comprises both network throughput measurements and synthetic network throughput data.

12. The method of any preceding claim, further comprising generating a map of network throughput and generating a deployment plan based on the generated map of network throughput which identifies locations for adding one or more cell sites where the network throughput is low.

13. The method of claim 12, wherein sensor data records are collected on a plurality of MNO networks and wherein the model of correlations calculates separate synthetic network throughput data for each MNO network, and wherein the deployment plan identifies locations for adding the one or more cell sites where two or more of the MNO networks have low networks throughput.

14. A computer-readable medium encoding a computer program for controlling an electronic device to perform the method of any of claims 1 to 13.

15. An electronic device comprising:
processing circuitry to perform data processing; and
data storage storing at least one computer program for controlling the processing circuitry to perform the method of any of claims 1 to 13.
